# EUROPEAN PATENT APPLICATION

(11) **EP 1 486 907 A1**
(43) Date of publication of application: **15.12.2004**
(21) Application number: 03291405.3
(22) Date of filing: 12.06.2003
(51) Int. Cl.: G06K 19/07, G06K 7/00

(54) **Method and system for multiplexing smart card electric connections**

(71) Applicant: Axalto S.A., 92120 Montrouge (FR)
(72) Inventor: Joffray, Olivier, 78810 Feucherolles (FR)
(74) Representative: Renault, Patricia Marie Jacqueline

(57) **Abstract**

The present invention concerns a method for allowing a portable object to work in different interface configurations, the portable object being provided with at least storage means and connectors able to connect said portable object with at least an object accepting device. Assigning different interface functions and/or different connection characteristics for a determined connection to at least one of said connectors is done by multiplexing means depending on the type of portable object accepting device(s) with which the portable object is connected.

## Description

The present invention concerns a method for allowing a portable object to work in different connections configurations.

The invention is particularly advantageous for smart cards being both compatible to USB (Universal Serial Bus) and ISO (International Standard Organization) 7816-x standards and usable as a secure gateway between two distinct environments as described in a European patent application filed by the present applicant the same day as the present application and whose title is "Smart and secure gateway for performing secure operations", hereafter called the Patent.

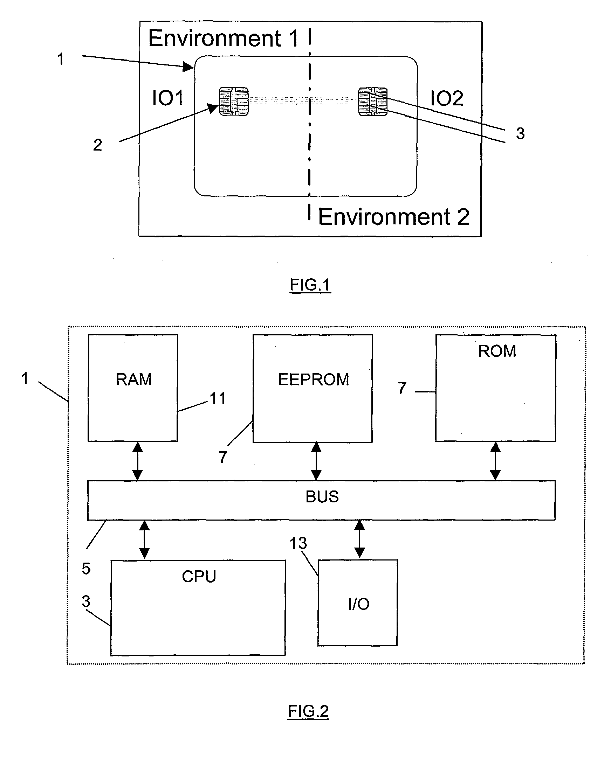

This invention is applicable to any smart card based application that may take place in both a confident environment such as the merchant terminal and an insecure environment such as a PC (Personal Computer) from home (an example of such a smart card is shown in figure 1).

### TECHNICAL FIELD

Cards with integrated circuit also called smart cards are small plastic devices, which contain one or more embedded integrated circuits. A card with integrated circuit can be for example a memory card or a microprocessor card called also microprocessor chip card. A smart card is accessed with a card reader that has an aperture or slot or else into which the smart card is inserted. The smart card reader covers every device used to receive or to be connected with a smart card and work with it (read, write, delete, and/or every possible operation). The smart card reader can be part or linked with a computer, a pin pad or else... The present invention covers smart cards but also every portable object provided with integrated circuit allowing to work or dialog with at least one portable object accepting device and, in embodiments described hereafter, portable object with at least one integrated circuit designed to offer security functions such as authentication, validation, encryption/decryption, secure storage, ..... The portable object accepting device may have the form of a housing provided with an aperture or slot to receive the portable object but also any form allowing the portable object to be connected to the portable object accepting device.

In more details, as indicated in figure 1, the active part of the smart card 1 is constituted of a chip in the thickness of the card connected to a module 2. The module comprises a set of flat connectors 3 (also called contacts, pads) on the surface of the card allowing said chip to be connected and work with a card-accepting device.

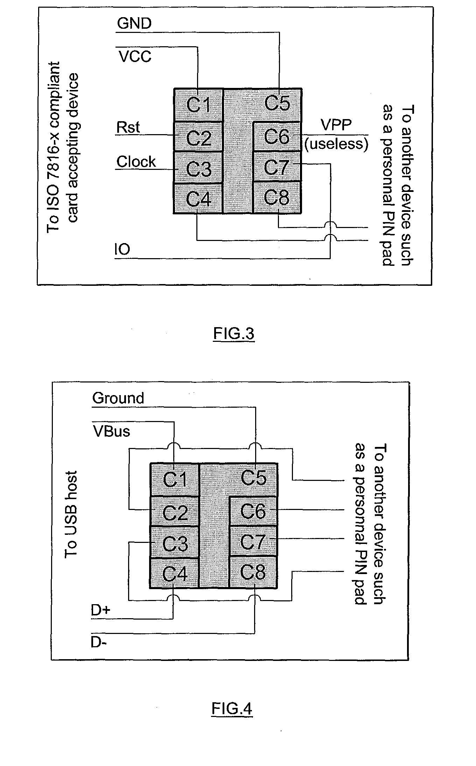

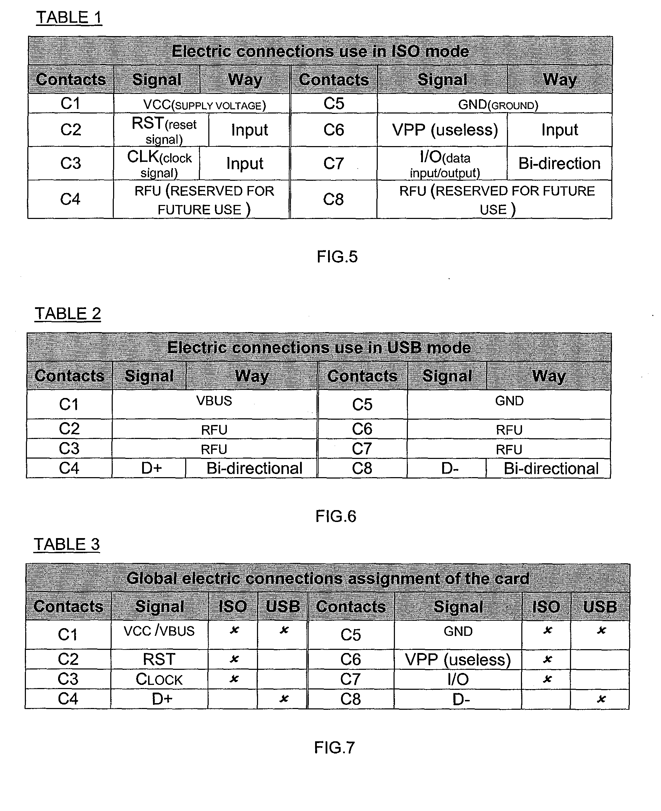

The ISO 7816-2 standard defines the dimension, the location and the assignment (also called hereafter function) of the electric connectors that should exist on a smart card. The ISO 7816-3 standard defines the use of the connector: the assignment for these connectors C1 to C8 according to ISO is shown on figures 3 and 5.

Until now, standard smart cards use a unique connection between the card and the card-accepting device (in figure 3, C7 is assigned to the input/output (I/O) according to ISO 7816-2 standard). Some advanced smart cards are also compatible with USB standard, and consequently are directly connectable to a personal computer (USB D+ and D- connectors - C4 and C8 connectors - figures 4 and 6).

However, as shown in the Patent, it is possible to connect several independent devices (a set of electronic and mechanical components establishing a data connection with a smart card through one I/O (input/output) only at a time) to a single smart card embedding several I/Os.

For example, a same smart card may face several scenarios:
1. When shopping at the supermarket, the user types its PIN (Personal Identification Number) on the point of sale smart card accepting device. The POS (Point Of Sale) device is the only apparatus in relation with the smart card. The data flow between the terminal and the card transit through one I/O only.
2. When shopping on the Internet from home, the user uses the same payment mean: his smart card. He does not type his PIN on the PC (Personal Computer) keyboard, but on a dedicated PIN pad connected to another I/O of the smart card, and fully independent from the PC. The smart card is connected to the PC through its USB interface and to the personal PIN pad. The card owner can consequently present his PIN to the card without having to type it on the PC keyboard in order to prevent a virus attack on the PC.

As described in the Patent, in order to realize such a gateway using a smart card, a good solution is to use two I/Os at the same time: I/O1 and I/O2:
1. I/O1 is the mean to exchange data with an insecure environment such as a PC from home.
2. I/O2 is the mean to exchange data with a secure environment such as a merchant terminal.

The smart card placed in the middle of the two environments filters the data sent from an environment to another, or sends and receives some data to and from both environments.

Then, when shopping on the Internet, it should be avoided to present the PIN through the I/O connected to the PC in order to prevent attacks. Only a second I/O where the personal PIN pad is connected should be used.

However, as shown in figure 7 (table 3), except the C6 connector (VPP) that is useless, a card that is both compatible with USB and ISO 7816 standards has no free connectors to address another device such as a personal PIN pad in the context of a gateway role for the smart card.

### BRIEF DESCRIPTION OF THE DRAWINGS

Other purposes, features and advantages of the invention will appear on reading the description which follows of the implementation of the method according to the invention and of a mode of realization of a portable object designed for this implementation, given as a non-limiting example, and referring to the attached drawings in which:
- Figure 1 is a schematic view of a non-limiting mode of realization of a smart card designed to implement the present invention;
- Figure 2 is a schematic view of an example of realization of an electronic unit integrated in a portable object according to the present invention such as a smart card;
- Figure 3 is a schematic view of the assignment according to the prior art of the connectors of a smart card connected to an ISO 7816-x compliant card accepting device;
- Figure 4 is a schematic view of the assignment according to the prior art of the connectors of a smart card connected to a USB host;
- Figures 5 to figure 9 are tables numerated from 1 to 5 showing the assignment, according to the present invention, of the connectors (also called contacts) respectively:
   - used in ISO mode according to the prior art (table 1);
   - used in USB mode according to the prior art (table 2);
   - both compatible with ISO and USB mode according to the prior art (table 3);
   - used with an ISO compliant card accepting device and a personal PIN pad according to one form of realization of the present invention (table 4);
   - used with an USB compliant card accepting device and a personal PIN pad according to another form of realization of the present invention (table 5).

### BEST WAY OF REALISING THE INVENTION

This invention belongs to the field of portable object provided with at least memory means (also called storage means) and connectors able to connect said portable object to at least an object-accepting device with which the portable object is able to work or dialog.

In a particular embodiment of the present invention shown in figure 2, the portable object is a smart card with an integrated electronic unit 1: the electronic unit 1 comprises at least a microprocessor CPU 3 with two-way connection via an internal bus 5 to a non volatile memory 7 of type ROM, EEPROM, Flash, FeRam or else storing at least a program to be executed, a volatile memory 11 of type RAM and input/output means 13 to communicate with the exterior. The unit 1 may comprise additional components not shown, connected to the internal bus. This type of unit is generally manufactured as a monolithic integrated electronic circuit, or chip, which once physically protected by any known means can be assembled on the integrated circuit card or similar for use in various fields, such as the bank and/or electronic payment cards, mobile radio telephony, pay television, health and transport.

The present invention consists in assigning different roles, uses to the smart card electric connectors depending on the context: this means multiplexing the smart card electric connections.

To do so, the smart card shall embed all software and hardware means to be able to check the type of device to which it is connected as shown in a European patent application filed by the present applicant the same day as the present application and whose title is "Method for changing the behavior of a smart card".

For example, the portable object, here the smart card, can detect the presence of a specific device with which it is connected and check its type by regularly polling the input(s)/output(s) or by receiving a signal from it through a specific input/output.

In the following example, the invention applies in a smart card, which is compatible with both USB and ISO protocols.

When connected to a USB host, a smart card only requires four electrics connectors (see figure 6): VBus, D+, D- and GND (USB standard). These electric connectors use four of the height electric connections defined in the ISO 7816-2 standard.

Consequently, as shown in figure 4, it is possible to assign the other four electric connectors of the smart card to another use such as addressing another device such as a personal PIN pad.

When connected to an ISO 7816-x compliant card accepting device, a smart card (see on figures 3 and 5) generally requires five electrics connectors: VCC, Reset, Clock, IO and GND (VPP is useless). These electric connectors use five of the height electric connections defined in the ISO 7816-2 standard.
Consequently, as shown on figure 5, it is possible to assign the other three electric connectors of the smart card to another use such as addressing another device such as a personal PIN pad.

Here below, a detailed example of multiplexing is presented: a same advanced smart card is used for:
1. Paying at a merchant shop on a point of sale payment device.
2. Securely shopping on-line using a personal computer connected to the Internet. The card application still requires the PIN (Personal Identification Number) presentation in order to authenticate the owner, but a personal PIN pad is used to type the PIN instead of having to type it on the PC keyboard.

The smart card is both compatible with the ISO 7816 and USB standards.

### Paying at the point of sale:

When inserted in a classic payment terminal, the exchanges use the ISO 7816 protocol and electric connections. All commands issued by the terminal, including the presentation of the PIN, go through the same I/O. The PIN is type on the card-accepting device, or on a dedicated PIN pad that comes with the payment terminal. The smart card is connected to one independent device only.

### Paying on the Internet:

When shopping on the Internet from a personal computer, the smart card and the PC exchange data using USB standards. As the PC is not a confident environment, the PIN shall never be typed on its keyboard. Hence, the user enters its Personal Identification Number on a personal PIN pad. The card used two separated I/Os: one for the exchanges with the PC, and one for the exchanges with the personal PIN pad. The card uses the electronic connections that are usually affected to connect an ISO compatible card-accepting device to address the personal PIN pad. The smart card is connected to two independent devices simultaneously.

The way the smart card connectors C1 to C8 are mapped is described here after:
- on a smart card not embedding the invention,
- when the card embeds the invention.

### On a smart card not embedding the invention:

Tables 1 and 2 of figures 5 and 6 indicate the way the electric connections are used depending on ISO (Figure 5) or USB (Figure 6) communication mode.

The tables 1, 2 and 3 (figure 7) show that, except VPP that is useless, there is no free contact available to connect the personal PIN pad to the smart card. As shown in table 3, all electric connections C1 to C8 already have an assignment (a function).

As described in the present invention, multiplexing some of them allows addressing the ISO protocol, the USB protocol and an additional personal PIN pad handled using a specific protocol.

### When the card embeds the invention:

In an implementation example of the present invention, the choice of the electric connection assignment is performed at the smart card power on. When the smart card is powered on, the choice between the tables 4 or 5 electric connections assignment is performed. The operating system (OS) of the CPU of the smart card determines how the electric connection shall be used.

The table 4 shows how a personal PIN pad is connectable to the smart card when it boots in ISO mode. This opportunity is not used for this example, but it may be required in another implementation.

At power-on, the card performs several tests through a dedicated hardware circuitry in order to check the presence (or absence) of some electric signals. When the tests are ended, an internal bit is positioned to indicate if the electric signals of the ISO mode are present, or another internal bit is set if it is the signals of the USB mode that are detected.
Then the smart card software (i.e. the OS) starts.
Depending on the bit set by the hardware detection circuitry, the code executed goes to the ISO or to the USB dedicated part. Software testing ends the communication mode detection.

The smart card embeds hardware and/or software functional blocks that are used to:
1. Check the electronic signal to determine if it is connected to an ISO card-accepting device or to a USB (or else) host;
2. Assign different functions (roles, uses, in fact "assignments") to the connectors as determined upon the startup context. The OS code assigns a role to the electronic connectors (e.g. input, output, input/output, reset, clock) using this functional block;
3. Support different electric and electronic characteristics for the incoming and/or outgoing signal such as the current, the voltage or the frequency. The OS code assigns the electric signals characteristics using this functional block. In a particular software embodiment, the tables 4 or 5 or different data structure indicate the waited characteristics for the determined assignments. If the assignment of the uses of the connectors does not differ according to the device with which it is connected, the multiplexing means can only be multiplexing means for the characteristics of the incoming and/or outgoing signal.

Each functional block of the smart card has its own limitation. The logical and physical characteristics of the electric signals supported for each connector are limited by the silicon design of the chip. For instance, it is not necessary to be capable to support every hardware characteristics on each connector. At silicon design time, the optimum configuration capabilities are chosen upon the marketing goals of the final component.

The core of the CPU embeds all required hardware and software to address all required peripheral. The signals linked to the electronic connection (C1 to C8) depend on the content of (a) hardware register(s) loaded by the software of the smart card. This register is the way to program the multiplexor(s) to connect a signal or another outside of the smart card.

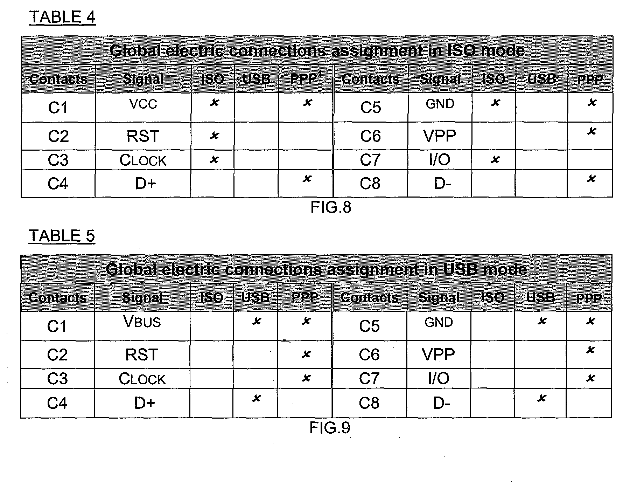

The OS loads the register and electric connection usage change:
1. To address a classic point of sale device, the software loads the register in order to have the smart card electric connections mapped as indicated in table 4 (figure 8). Note that the personal PIN pad connections are not required as current POS device embeds a keyboard or a PIN pad for the PIN entering.
2. To address a USB host (such as a PC for purchasing over the Internet) and a personal PIN pad, the software loads the register in order to have the smart card electric connections mapped as indicated in table 5 (figure 9).

In another implementation, one could choose to program the multiplexor(s) only from the result of the signal testing using hardware circuitry instead of letting the opportunity to the OS through a register(s) loading.

The way the connectors are mapped could be defined when the card is reset, but not exclusively.

## Claims

1. Method for allowing a portable object to work in different connections configurations, the portable object being provided with at least storage means and connectors able to connect said portable object with at least an object accepting device **characterized in that** it consists through multiplexing means in assigning different connection functions and/or different connection characteristics for a determined connection to at least one of said connectors depending on the portable object accepting device(s) with which the portable object is connected.

2. Method according to claim 1, **characterized in that** the assignment is done through hardware means according to tests performed by a dedicated hardware circuitry aimed at determining the device(s) with which the portable object is connected.

3. Method according to claim 1, **characterized in that** the assignment is done through the loading of the content of data structure dedicated to the assignment of the connectors according to tests performed by a dedicated hardware circuitry aimed at determining the device(s) with which the portable object is connected.

4. Portable object being provided with at least storage means and connectors able to connect said portable object with at least an object accepting device, **characterized in that** it comprises multiplexing means allowing to assign different connection functions and/or different connection characteristics for a determined connection to at least one of said connectors depending on the portable object accepting device(s) with which the portable object is connected.

5. Portable object according to claim 4, **characterized in that** the portable object is a card with integrated circuit, the integrated circuit comprising said storage means and being connected to said connectors.

6. Portable object according to one of the claims 4 or 5 **characterized in that** the portable object comprises a dedicated hardware circuitry allowing to perform tests aimed at determining the device(s) with which the portable object is connected.

7. Portable object according to one of the claims 4 or 5, **characterized in that** the portable object comprises software means which load the content of a data structure dedicated to the assignment of the connectors according to tests performed by a dedicated hardware circuitry aimed at determining the device(s) with which the portable object is connected.

8. Electronic unit intended to be integrated in a portable object according to one of the claims 4 to 7.

9. Computer program including program code instructions to execute the steps of the method according to one of claims 1 to 3 when said program is run in a data processing system.
